# EUROPÄISCHE PATENTSCHRIFT

(11) **EP 1 010 894 B1**
(45) Veröffentlichungstag und Bekanntmachung des Hinweises auf die Patenterteilung: **03.03.2004**
(21) Anmeldenummer: 99122737.2
(22) Anmeldetag: 16.11.1999
(51) Int. Cl.: F04D 13/08, F04D 29/40, F04D 15/00, F04D 29/70, F04D 29/60

(54) **Teicheinsatz mit Pumpe**
Pond insert with pump
Insert avec pompe pour étang

(30) Priorität: 19.12.1998 DE 19858904; 21.05.1999 DE 19923354
(43) Veröffentlichungstag der Anmeldung: 21.06.2000
(73) Patentinhaber: GARDENA Kress + Kastner GmbH, D-89079 Ulm (DE)
(72) Erfinder:
(74) Vertreter: Patentanwälte Ruff, Wilhelm, Beier, Dauster & Partner

(56) Entgegenhaltungen:
- DE-A- 4 025 498
- DE-U- 7 613 069
- DE-U- 7 809 116
- GB-A- 2 315 821
- US-A- 3 973 930
- US-A- 4 645 603
- US-A- 5 215 656

## Beschreibung

Die Erfindung betrifft einen Teicheinsatz, insbesondere zum Einsetzen in einen Gartenteich, mit mindestens einer motorbetriebenen Pumpe.

Teichpumpenanordnungen dieser Art haben in der Regel eine elektromotorisch betriebene Pumpe und werden beispielsweise dafür genutzt, mit im Gartenteich gesammeltem Wasser eine Fontaine oder ein anderes Wasserspiel zu betreiben (vol. z.B. GB-A-2 315 821). Alternative Nutzungen liegen beispielsweise im Bereich der Teichbelüftung oder im Bereich der Umwälzung und Filterung des Teichwassers. Hierzu kann das Wasser im Bereich eines Einlaßanschlusses der Pumpe angesaugt und unter einem entsprechend der jeweiligen Anwendung erhöhten Druck durch einen Auslaßanschluß abgegeben werden.

Der Erfindung liegt die Aufgabe zugrunde, einen Teicheinsatz der genannten Art mit hohem Gebrauchswert zu schaffen.

Diese Aufgabe wird gelöst durch einen Teicheinsatz mit den Merkmalen von Anspruch 1. Vorteilhafte Weiterbildungen sind in den Unteransprüchen angegeben, deren Wortlaut durch Bezugnahme zum Bestandteil der Beschreibung gemacht wird.

Bei einem erfindungsgemäßen Teicheinsatz hat die vorzugsweise elektromotorisch betriebene Pumpe auslaßseitig einen ersten Auslaßanschluß und zusätzlich mindestens einen zweiten Auslaßanschluß. Eine solche Ausgestaltung mit mehreren, vorzugsweise zwei separat nutzbaren Ausgangsanschlüssen bietet eine wesentliche Erweiterung der Einsatzmöglichkeiten von Teichpumpen. Zum einen können bei Bedarf mehrere ggf. unterschiedliche Funktionen gleichzeitig mit einer Pumpe ermöglicht werden. Zum anderen können die Auslaßanschlüsse bzgl. Dimensionierung, Anschlußmöglichkeiten, Durchlaßquerschnitten bzw. Durchlaßmengen o.dgl. unterschiedlich ausgelegt werden, so daß sich variablere Anschlußmöglichkeiten mit einer besseren Anpassung an gewünschte Funktionen ergeben. Mehrere an unterschiedlichen Stellen der Pumpe angeordnete und ggf. in unterschiedliche Richtungen gerichtete Anschlüsse schaffen für einen Nutzer außerdem mehr Spielräume bzgl. der Aufstellung derartiger Teicheinsätze und erleichtern den Anschluß ggf. vorgesehener weiterer Funktionseinheiten an die Auslaßanschlüsse.

Insbesondere kann vorgesehen sein, daß der erste Auslaßanschluß und ein zweiter Auslaßanschluß im wesentlichen rechtwinklig zueinander ausgerichtet oder ausrichtbar sind, wobei vorzugsweise ein Auslaßanschluß im wesentlichen parallel und der zweite Auslaßanschluß im wesentlichen senkrecht zu einer Standfläche der Pumpe ausgerichtet oder ausrichtbar ist. Dadurch kann erreicht werden, daß bei regulärer Standposition des Teicheinsatzes ein Anschluß im wesentlichen vertikal nach oben und der andere im wesentlichen horizontal ausgerichtet ist.

Bei einer Weiterbildung ist vorgesehen, daß mindestens einer der Auslaßanschlüsse bezogen auf eine Standfläche der Pumpe variabel ausrichtbar ist. Durch die vorzugsweise stufenlos eindimensional oder mehrdimensional über einen geeigneten Winkelbereich veränderbare Ausrichtung kann auf einfache Weise beispielsweise die Wurfrichtung einer angeschlossenen Strahldüse verändert werden oder der Anschluß kann bezogen auf einen anzuschließenden Schlauch derart vorteilhaft ausgerichtet werden, daß der Schlauch ohne unzulässig starke Verbiegung oder Abknickung anschließbar ist. Die veränderbare Ausrichtung kann beispielsweise dadurch erreicht werden, daß der Anschluß an einem flexiblen und bzgl. seiner Biegestellung feststellbaren Leitungsstück vorgesehen ist. Bevorzugt ist mindestens ein Auslaßanschluß an einem vorzugsweise im wesentlichen formstabilen, wasserführenden Fortsatz vorgesehen, der richtungsveränderlich mit einem Ausgangsanschlußstutzen der Pumpe verbunden ist. Vorzugsweise sind der Ausgangsanschlußstutzen und der Fortsatz über ein wasserführendes Kugelgelenk verbunden. Das Kugelgelenk ist insbesondere reibschlüssig in einer durch Überwindung der Reibkraft veränderlichen Position gehalten. Die variable Ausrichtbarkeit eines Auslaßanschlusses kann auch bei Pumpen mit nur einem Ausgangsanschluß vorteilhaft sein.

Eine andere Möglichkeit der Realisierung einer veränderbaren Ausrichtung eines oder mehrerer Ausgangsanschlüsse ist bei einer Weiterbildung dadurch gegeben, daß dem Teicheinsatz eine Standfußeinrichtung zugeordnet ist, die eine Standfläche für die Pumpe definiert. An dieser kann die Pumpe beweglich und/oder lösbar, befestigt sein. Die Standfußeinrichtung bzw. Standplattform kann derart ausgebildet sein, daß die Pumpe um eine im wesentlichen standflächenparallele Achse bzgl. des Standfußes verdrehbar bzw. verschwenkbar ist. Dadurch kann ein an der Pumpe vorgesehener, quer zur Schwenkachse ausgerichteter Anschlußstutzen bzw. Auslaßanschluß bzgl. seiner Ausrichtung im Raum durch Verschwenkung der Pumpe in der Aufnahme der Standfußeinrichtung verändert werden. Die Aufnahme für das schwenkbare Geräteteil in der Standfußeinrichtung kann beispielsweise mehrere Rastpositionen für die Verschwenkung des Geräteteils aufweisen, durch die eine unbeabsichtigte Verschwenkung verhindert wird. Ein Standfuß kann auch integraler Bestandteil der Pumpe bzw. ihres Gehäuses sein.

Bei einer Weiterbildung ist vorgesehen, daß bei mindestens einem der Auslaßanschlüsse die Durchflußmenge unabhängig vom Pumpenantrieb einstellbar ist. Dadurch ist eine variable Wasserabgabe auch bei Verwendung kostengünstiger Pumpen mit konstanter Förderleistung möglich. Insbesondere kann der Durchlaßquerschnitt mindestens eines Auslaßanschlusses, vorzugsweise stufenlos, veränderbar sein, beispielsweise mittels eines zugeordneten vorzugsweise manuell betätigbaren Regulierventils.

Besonders vorteilhaft kann es sein, wenn der erste und der zweite Ausgangsanschluß derart miteinander kommunizierend ausgebildet sind, daß die Durchflußmenge durch einen Auslaßanschluß mittels Regulierung der Durchflußmenge oder des Querschnitts des anderen Ausgangsanschlusses einstellbar ist. So ist es möglich, einen der Ausgangsanschlüsse mit konstantem Durchflußquerschnitt zu betreiben und die Durchflußmenge durch diesen Ausgangsanschluß, der insbesondere zu einem Wasserspiel o.dgl. führen kann, dadurch zu verändern bzw. einzustellen, daß der Durchflußquerschnitt oder die Durchflußmenge des anderen Ausgangs beispielsweise durch das genannte Regulierventil veränderbar ist. Der andere Ausgangsanschluß wirkt in diesem Fall als Bypass, über welchen bei konstanter Pumpenleistung der Durchfluß durch einen Anschluß mit konstantem Querschnitt beeinflußbar ist. Das Regulierventil kann über eine Leitung entfernt von der Pumpe bzw. dem beeinflußten Auslaßanschluß angeordnet sein, so daß beispielsweise die Pumpe mit geringerer Leitungslänge und damit mit geringerem Druckverlust mit einem Ausgang an ein Wasserspiel an einem schwer zugänglichen Ort des Teiches angeordnet sein kann und eine ggf. flexible Leitung von dem zweiten Ausgangsanschluß zu dem Regulierventil an einem leicht zugänglichen Ort des Teiches führt. Von diesem aus kann dann die Fördermenge durch den ersten Ausgangsanschluß nach dem genannten Bypass-Prinzip verändert werden. Wenn der querschnittsveränderbare Auslaßanschluß leicht zugänglich ist, kann das zur Querschnittsänderung vorgesehene Regulierventil auch unmittelbar an diesem angebracht, beispielsweise angeschraubt sein. Es ist auch möglich, beide bzw. alle Pumpenauslaßanschlüsse mit veränderbarem Durchflußquerschnitt auszubilden, beispielsweise durch Zuordnung entsprechender Regulierventile.

Bei einer Weiterbildung ist vorgesehen, daß der Eingangsanschluß als Eingangsstutzen mit einem Schraubgewinde oder einem Kupplungsanschluß ausgebildet ist. Alternativ oder zusätzlich kann mindestens ein Ausgangsanschluß als Ausgangsstutzen mit einem Schraubgewinde oder einem Kupplungsanschluß versehen sein. Dies ermöglicht auf einfache Weise, die Pumpe bei Bedarf für wechselnde Funktionen und/oder mit anderen Betriebsparametern zu betreiben. Beispielsweise kann ein Pumpenausgangsanschluß weiter verzweigt und/oder über eine Leitung, insbesondere eine flexible Leitung, wie einen Schlauch, an eine von der Pumpe weiter beabstandete Stelle verlegt bzw. geleitet werden. Über einen mit einem Schraub- oder Kupplungsanschluß versehenen Eingangsstutzen kann z.B. eine außerhalb des Teiches liegende, teichexterne Wasserquelle angeschlossen werden. So kann beispielsweise durch einen höheren Zulaufdruck die Fördermenge am Pumpenausgang und damit beispielsweise die Wurfhöhe eines Wasserspieles verändert werden.

Eine vorteilhafte Nutzung einer Pumpe mit mehreren, insbesondere zwei Auslaßanschlüssen kann im gleichzeitigen Betrieb von zwei Funktionen bestehen, beispielsweise dem Betrieb eines Wasserspiels o.dgl. über einen der Ausgangsanschlüsse und eine vorzugsweise gleichzeitige Teichbelüftung über einen anderen Ausgangsanschluß. Die Teichbelüftung kann vorteilhaft dadurch erreicht werden, daß an mindestens einem der Ausgangsanschlüsse eine nach Art einer Wasserstrahlpumpe arbeitende Strahlsaugdüseneinrichtung mit mindestens einem quer zur Strahlrichtung ausgerichteten Anschluß für eine Luftansaugleitung angebracht wird. Diese kann über die Wasseroberfläche hinausragen. Die Luftansaugung erfolgt nach dem bekannten Wasserstrahlpumpen-Prinzip.

Eine vorteilhafte Weiterbildung sieht vor, daß der Teicheinsatz mindestens einen fest mit der Pumpe oder einem pumpenfesten Gehäuse verbundenen oder verbindbaren Behälter zur Aufnahme von insbesodere schüttfähigem Beschwerungsmaterial, wie Kies, Steinen o.dgl., aufweist. Die Ausbildung des Teicheinsatzes mit einem zur Aufnahme von Beschwerungsmaterial vorgesehenen Behältnis entbindet den Benutzer von der zum Teil bereits gebräuchlichen, aber umständlichen Methode, einen separaten Behälter mit Beschwerungsmaterial zu füllen und einen Teicheinsatz danach im Behälter auf oder in dem Beschwerungsmaterial anzuordnen. Durch die vorteilhafte bauliche Vereinigung von Pumpe und Behälter, die durch eine unlösbare, vorzugsweise aber durch eine lösbare, starre Verbindung hergestellt werden kann, wird die Handhabung wesentlich vereinfacht. Insbesondere kann ein Behälter bereits auf die zur Verbindung vorgesehene Pumpe bzgl. Dimension, Anordnung von Anschlüssen, Gewicht und/oder dergleichen abgestimmt werden.

Der Behälter kann beispielsweise einen Aufnahmeraum für Beschwerungsgut in einem Fußteil des Teicheinsatzes aufweisen. Eine Weiterbildung sieht vor, daß der Behälter korbartig ausgebildet ist. Die Pumpe kann zumindest mit dem Bereich des Einlaßanschlusses im wesentlichen innerhalb des Behälters angeordnet sein oder der Anschluß kann dem Behälter zugewandt sein. Vorzugsweise ist vorgesehen, daß der Behälter die Pumpe umgebende Seitenwände hat, deren Höhe der Höhe der mit dem Behälter verbundenen Pumpe derart angepaßt ist, daß die Pumpe durch in dem Behälter aufgenommenes Beschwerungsmaterial und/oder Schüttgut im wesentlichen vollständig abdeckbar ist. Die Pumpe wird dann für einen außenstehenden Betrachter nicht oder nur noch mit einem ggf. über das Beschwerungsgut hinausragenden Ausgangsanschlußstutzen in Erscheinung treten, so daß das Erscheinungsbild des mit Einsatz versehenen Teiches natürlich oder naturnah bleibt. Vorzugsweise ist hierzu die Behälteroberkante höher als der wesentliche Teil der aufgenommenen Pumpe bzw. von deren Gehäuse:

Bei Ausführungsformen mit einem mit schüttbarem Beschwerungsgut befüllbaren Behälter ist vorteilhafterweise eine als Ansaugöffnung dienende Einlaßöffnung der Pumpe bei gefülltem Behälter innerhalb des Beschwerungsmaterials angeordnet oder zumindest gegen dieses gerichtet. Dadurch wird eine der Einlaßöffnung vorgeschaltete Filtereinrichtung geschaffen, wobei das Beschwerungsmaterial gleichzeitig als ggf. grobes Vorfilter für die angesaugte Flüssigkeit dienen kann. Auch das Behältnis selbst bzw. seine an vielen Stellen durchbrochene Behälterwand kann eine Vorfilterfunktion übernehmen, wobei durch den Aufbau des Behälterwandmaterials und dessen Maschenweite bzw. öffnungsweite die Feinheit der Filterung bestimmbar ist.

Eine Weiterbildung sieht vor, daß der Behälter bleibend formveränderlich ist, wobei vorzugsweise der Behälter durch ein Netz oder einen Sach gebildet ist. Der Behälter kann über eine Öffnung mit Beschwerungsmaterial befüllbar sein. Der formvariable Behälter ist vorzugsweise derart ausgebildet, daß er unterhalb einer Standfläche der Pumpe angeordnet oder anordenbar ist. Eine solche Ausführungsform ist insbesondere vorteilhaft für die Positionierung eines Teicheinsatzes an einer Stelle mit nicht horizontal und/oder nicht eben verlaufendem Untergrund. Durch die Formanpassungsfähigkeit bzw. - veränderlichkeit des Behältnisses kann das Beschwerungsgut im Behältnis so zurechtgerückt werden, daß die Unterseite des Behälters sich dem Untergrund anpaßt und seine Oberseite mit der Standfläche der Pumpe in gewünschter Weise, insbesondere etwa horizontal ausgerichtet ist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte Ausführungen darstellen können.

Es zeigen:
- Fig. 1: eine schrägperspektivische Ansicht einer Ausführungsform eines erfindungsgemäßen Teicheinsatzes mit einer Pumpe, die in einem Aufnahmekorb für Beschwerungsmaterial befestigt ist,
- Fig. 2: einen Querschnitt durch die rechtwinklig zueinander und zur Pumpenlängsachse ausgerichteten Auslaßanschlüsse der Pumpe gemäß Fig. 1,
- Fig. 3: eine Seitenansicht in teilweisem Längsschnitt durch die Pumpe nach Figuren 1 und 2,
- Fig. 4: einen nach Art einer Wasserstrahlpumpe arbeitenden Belüftungsaufsatz für einen Pumpenauslaßanschluß,
- Fig. 5: einen anderen Teicheinsatz, bei dem eine Pumpe um ihre Längsachse verschwenkbar in einem Standfuß angeordnet ist sowie einen gestrichelt gezeigten Korbbehälter zur Aufnahme der Pumpenanordnung und von Beschwerungsgut,
- Fig. 6: ein anderer Teicheinsatz, bei dem nur die Einlaßseite einer Pumpe mit dem von einem Filtergehäuse umgebenen Einlaßanschluß innerhalb eines korbartigen Behälters angeordnet ist und
- Fig. 7: einen Teicheinsatz mit einer Pumpe, die auf einem durch ein mit Steinen gefülltes Netz gebildeten Bodenausgleichsbehälter steht.

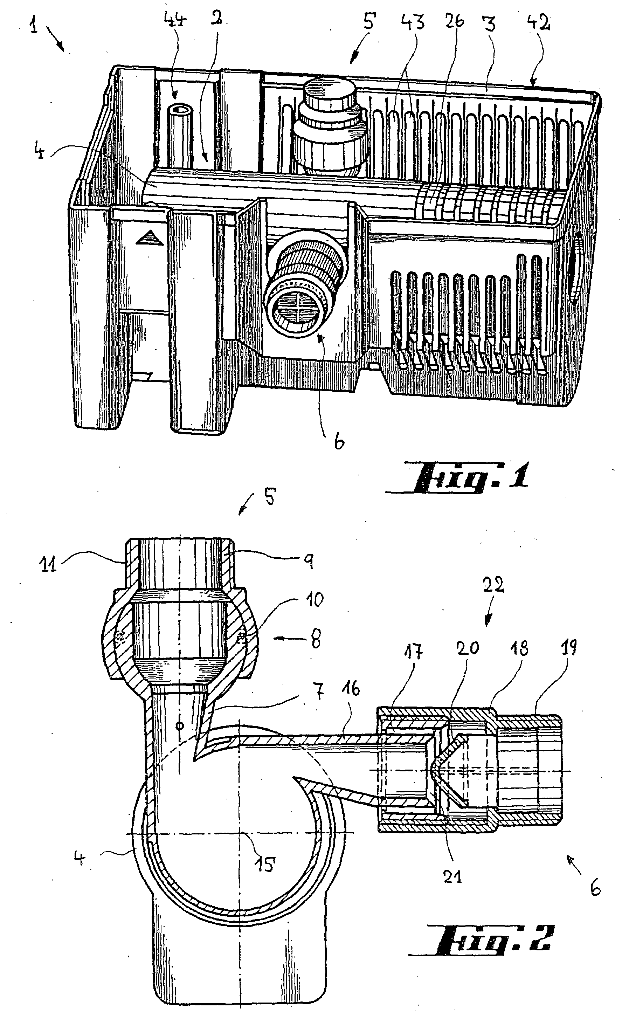

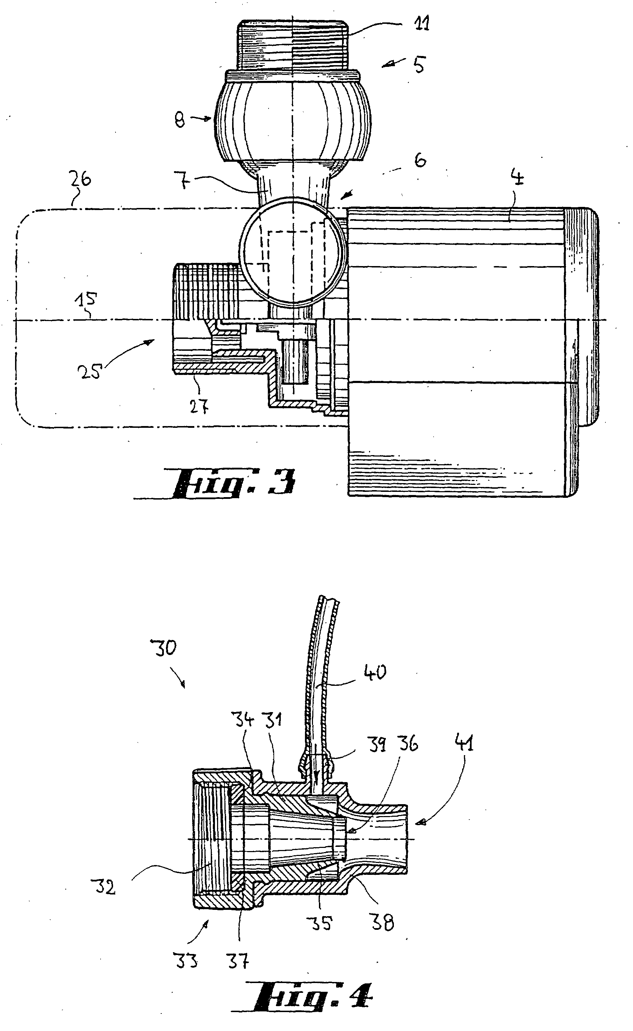

Die schrägperspektivische Darstellung in Fig. 1 zeigt einen beispielsweise auf dem Boden eines Gartenteichs aufstellbaren Teicheinsatz 1, der eine elektromotorisch betriebene Pumpe 2 hat, die im wesentlichen vollständig innerhalb eines kastenförmigen, nach oben geöffneten Kunststoff-Korbbehälter 3 angeordnet ist. Die fest mit dem Behälter 3 verbundene Tauchpumpe 2 hat ein kreiszylindrisches Pumpengehäuse 4, von dem ein erster Auslaßanschluß 5 vertikal nach oben und ein zweiter Auslaßanschluß 6 im wesentlichen horizontal zur Seite abgeht und durch eine U-förmige Ausnehmung im Bereich der Vorderwand des Behälters nach außen ragt. Wie in Fig. 2 gut zu erkennen ist, ist der einstückig mit dem Pumpengehäuse ausgebildete Anschlußstutzen 7 des ersten Ausgangsanschlusses 5 über ein wasserführendes Kugelgelenk 8 abgedichtet mit einem Fortsatz 9 verbunden. Dabei ist ein einstückig mit dem Fortsatz ausgebildetes kugelabschnittförmiges äußeres Gelenkteil auf ein einstückig mit dem Anschlußstutzen 7 ausgebildetes kugelabschnittförmiges inneres Gelenkteil schnappend aufgesetzt. Die zweidimensional um insgesamt ca. 50° gegeneinander verschwenkbaren Teile des Kugelgelenkes können durch eine beispielsweise in einer Umfangsnut des inneren Gelenkteils umlaufende Rundschnurdichtung 10 gegeneinander abgedichtet sein. Die beiden Teile des Kugelgelenkes sind in einer eingestellten Position durch eine Haftreibungskraft gehalten, die gegen ein unbeabsichtigtes Verdrehen sichert und zur beabsichtigten Verstellung der Ausrichtung des Fortsatzes 9 gegenüber dem Pumpengehäuse bzw. dem zweiten Anschluß 6 von Hand überwindbar ist. Dadurch ist es möglich, bei unveränderter Pumpenposition eine zweidimensionale Änderung der Austrittsrichtung bei einem durch die Lage der Pumpe festgelegten Auslaßanschluß durchzuführen und dabei eine Richtungsumlenkung innerhalb des Strömungsweges im Auslaßanschluß zu bewirken. Am gelenkabgewandten Ende des Fortsatzes 9 ist ein Außengewinde 11 ausgebildet, das beispielsweise zum Anschluß eines Schlauches an den Fortsatz bzw. an den Pumpenauslaß 5 nutzbar ist.

Der bezogen auf die Pumpenlängsachse 15 um 90° gegenüber dem ersten Pumpenanschluß verdrehte zweite Pumpenanschluß 6 hat am Ende eines einstückig mit dem Pumpengehäuse ausgebildeten Anschlußstutzens 16 ein Außengewinde 17, auf das im gezeigten Beispiel eine Regulierhülse 18 aufgeschraubt ist, die am pumpenabgewandten Endabschnitt ihrerseits ein Außengewinde aufweist, über das beispielsweise ein Schlauch o.dgl. an den zweiten Pumpenauslaß anschließbar ist. Die Regulierhülse hat in ihrem Inneren einen zentrischen Dichtungskegel 20, der einer kegelstumpfförmigen Dichtfläche 21 am stirnseitigen Ende des Anschlußstutzens 16 zugewandt ist. Dadurch wird ein Regulierventil 22 geschaffen. Durch Aufschrauben der Regulierhülse 18 auf den Gewindeanschluß 17 des Stutzens 16 läßt sich der Durchflußquerschnitt zwischen Dichtfläche 21 und Dichtungskegel 20 und damit der Durchflußquerschnitt des zweiten Auslaßanschlusses 6 stufenlos variieren, wobei der Anschluß bei vollständigem Aufschrauben der Regulierhülse vollständig absperrbar ist. Die beiden Ausgangsanschlüsse 5, 6 kommunizieren über das Innere des Pumpengehäuses direkt miteinander, wobei das Verhältnis ihres Strömungswiderstandes das Verhältnis der jeweiligen Durchflußmengen bestimmt. So ist es beispielsweise möglich, die Pumpe 2 mit geringer Leitungslänge und damit mit geringem Druckverlust ggf. mit dem Ausgangsanschluß 5 konstanten Querschnitts direkt an ein Wasserspiel an einem schwer zugänglichen Ort des Teiches anzuordnen und eine Regulierleitung vom zweiten Ausgangsanschluß 6 zu einem bequemen erreichbaren Ort am Teichrand zu führen, von wo dann bei konstanter Förderleistung der Pumpe bzw. unverändertem Pumpenantrieb die Fördermenge durch den ersten Ausgang 5 nach oben erläuterten Bypass-Prinzip steuerbar ist. An dem zweiten Anschluß bzw. Ausgang 6 kann auch ein Sprudler, ein Bachlauf, ein Strömungserzeuger o.dgl. angeschlossen werden.

In Fig. 4 ist ein beispielsweise als Zubehörteil erhältlicher Belüftungsaufsatz 30 gezeigt, der zum Anschluß an dem horizontalen zweiten Ausgangsanschluß 6 der in den Figuren 1 bis 3 gezeigten Pumpe vorgesehen ist und der dort entweder unmittelbar auf den Ausgangsanschlußstutzen 16 oder auf das ausgangsseitige Gewinde 19 der Regulierhülse 18 aufgeschraubt oder, bei anderen Ausführungen, aufgesteckt werden kann. Der Belüftungsaufsatz 30 hat einen Wasserdüsenkörper 31, der einen an seiner Außenseite mit längs laufenden Griffrillen und an seiner Innenseite mit einem Innengewinde 32 versehenen Gewindeabschnitt 33 hat, der unter Ausbildung einer nach innen gerichteten Radialschulter 34 in einen sich auslaßseitig konisch verjüngenden Düsenabschnitt 35 übergeht, der eine Düsenöffnung 36 bildet. Der Düsenkörper kann unter Zwischenlage einer Dichtung 37 abgedichtet auf das Auslaßende des Anschlußstutzens 16 oder der Regulierhülse 18 aufgeschraubt werden. Auf den Düsenabschnitt ist eine gegenüber diesem frei bzw. unbegrenzt verdrehbare Außenhülse 38 verliersicher aufgeschnappt. Diese hat eine mit einer Ringwulst an der Außenseite des Düsenabschnittes zusammenwirkende innere Ringnut zur Verliersicherung und Drehführung sowie einen radial abragenden Leitungsanschluß 39, auf den beispielsweise ein über die Teichwasseroberfläche führender Kunststoff-Luftschlauch 40 verliersicher aufsteckbar ist. Stromabwärts des Luftanschlusses 39 hat die Außenhülse eine Durchmesserverjüngung, die zu einem stromabwärts der Düsenöffnung 36 liegenden Strahlauslaß 41 führt. Wenn die Strahlsaugdüseneinrichtung 30 auf den zweiten Auslaß aufgeschraubt und die Pumpe eingeschaltet ist, wird gefördertes Wasser unter hoher Geschwindigkeit durch die Düsenöffnung 36 in den folgenden, von der Außenhülse umschlossenen Raum gespritzt, in den die Luftleitung mündet. Das mit hoher Geschwindigkeit austretende Wasser reißt Luft mit, die sich mit dem Wasser vermischt, so daß am Strahlaustritt 41 ein Luft-Wassergemisch austritt, das sich im Teichwasser verteilt und dessen Sauerstoffgehalt erhöht. Die zur Belüftung benötigte Luft wird kontinuierlich durch den Luftschlauch 40 zur Wasserstrahlpumpe 30 gesaugt.

Der in Fig. 4 gut zu erkennende, koaxial mit der Pumpenlängsachse 15 angeordnete Eingangsanschluß bzw. Einlaßanschluß 25 ist bei der Ausführungsform nach Fig. 1 von einem becherförmigen Filtergehäuse bzw. Filtergitter 26 mit achsparallel verlaufenden Längsschlitzen umgeben. Dadurch wird die Ansaugung gröberer Stücke wie Äste, Blätter o.dgl. in die Pumpe verhindert. Der Eingangsstutzen 25 hat bevorzugt ein Außengewinde 27, das dazu genutzt werden kann, bei abgenommenem Filtergehäuse 26 eine Zuleitung an die Einlaßseite der Pumpe anzuschließen. Auf die Gewindeanschlüsse des Eingangsstutzens 25 oder der Ausgangsstutzen können auch gebräuchhliche Hahnstücke von Schnellkupplungssystemen aufgeschraubt werden.

Die beschriebene Pumpeneinrichtung kann fest mit dem korbähnlichen Behälter 3 verbunden, beispielsweise verschraubt, mit diesem verrastet oder durch einstückige Ausbildung von Korbbehältnis und Pumpengehäuse unlösbar mit dem Behälter verbunden sein. Die vertikalen Seitenwände des rechteckigen Korbbehältnisses umgeben die Pumpe allseitig und sind so hoch, daß ihre Oberkante 42 mit Abstand oberhalb des Pumpengehäuses liegt und nur der richtungsveränderliche Fortsatz 9 über die Oberkante hinausragt. Griffgünstig gestaltete Grifföffnungen an den schmalen Stirnseiten des Korbbehältnisses erleichtern dessen Handhabung beim Einsetzen in den oder Herausnehmen aus dem Teich. Auf der das Filtergehäuse 26 umgebenden Seite haben die seitlichen Längswände vertikale Längsschlitze, die bei versenktem Teicheinsatz als Grobfilter gegen im wesentlichen horizontal herantreibendes Schwebegut dienen können. Die nach außen vorgestülpten Seitenwände im das Pumpengehäuse 4 umgebenden Teil des Behälters sind dagegen weitgehend geschlossen und haben an ihren Innenseiten vertikale Aufnahmehülsen 44, die beispielsweise zur Befestigung von Lampen am Teicheinsatz dienen können, in dem ein Haltestab, der an seinem oberen Ende ein oder mehrere Lampen tragen kann, mit seinem der Aufnahme 44 angepaßten unteren Ende in diese von oben eingesteckt wird. Die Aufnahmen 44 können selbstverständlich auch zur lösbaren Befestigung anderer am oder im Teich zu befestigender Gegenstände, beispielsweise genutzt werden. Das Korbbehältnis 3 des Teicheinsatzes kann vor oder nach dem Einsetzen des Teicheinsatzes in den Teich bis zu seiner Oberkante mit Beschwerungsgut wie Kies, Steinen o.dgl. gefüllt werden, wodurch die Standfestigkeit des Teicheinsatzes auf dem Teichboden auf einfache Weise erhöht wird. Zudem kann die Teichoptik verbessert werden, da das Beschwerungsgut die Pumpe im wesentlichen vollständig gegen Einsicht von außen verdecken kann. Weiterhin kann das Schüttgut, das das Filtergehäuse 26 umgibt, als zusätzliches, grobes Vorfilter für die Ansaugseite dienen.

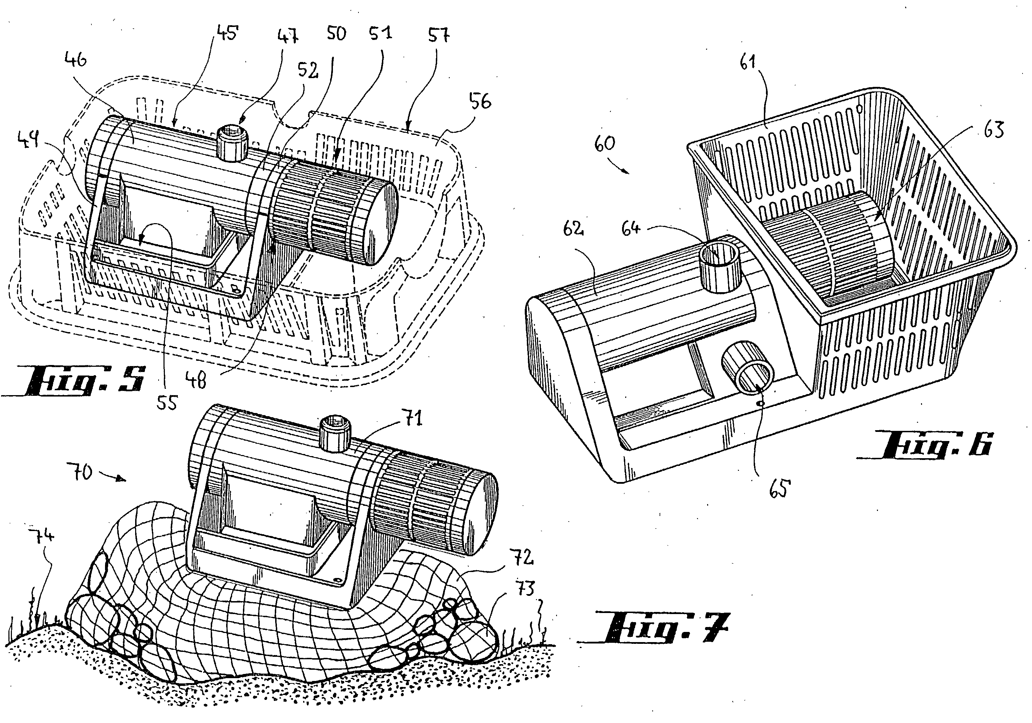

In Fig. 5 ist eine Teichpumpenanordnung schematisch dargestellt, bei der die Pumpe 45 einen im wesentlichen kreiszylindrischen Grundkörper 46 aufweist, von dem beispielsweise zwei Ausgangsanschlußstutzen abgehen, wobei nur der obere Anschlußstutzen 47 erkennbar ist. Der Grundkörper 46 ist in nach oben geöffnete, teilkreisförmig ausgebildete Aufnahmen 48 einer Standfußeinrichtung 49 schnappend eingesetzt. Die Aufnahmen 48 wirken derart mit Rastringen 50 des Grundkörpers zusammen, daß der Grundkörper in den Aufnahmen der Standplattform 49 um seine Längsachse schwenkbar ist und dabei in mehreren Positionen rastend gehalten wird. Beispielsweise können regelmäßige Rastschritte in 5°-Stufen vorgesehen sein. In Verlängerung des Grundkörper 46 ist ein mit axialen Längsschlitzen versehener, becherförmiger Filterkörper 51 abnehmbar aufgesetzt, der den Bereich der stirnseitigen Einlaßöffnung der Pumpe 45 umschließt. Über einen Mengenregulierring 52 kann beispielsweise die Fördermenge bequem variiert werden.

In der Standfußeinrichtung 49 ist unterhalb des Pumpen-Grundkörpers 46 ein Aufnahmeraum 55 zur Aufnahme von beschwerendem Material, insbesondere schüttfähigem Material wie Kies, Steinen o.dgl. ausgebildet. Durch Beschwerung der Pumpe mittels des in diesem Aufnahmeraum gehaltenen Beschwerungsmaterials läßt sich die Standfestigkeit der aufgestellten Pumpe auf einfache, kostengünstige und naturnahe Weise verbessern.

In Fig. 5 ist gestrichelt angedeutet, daß die Pumpe 45 samt Standfuß in ein die Pumpe allseitig umgebendes, größeres, korbähnliches Kunststoff-Behältnis 56 eingesetzt sein kann. Hierzu kann entweder die Standfußeinrichtung beispielsweise in eine entsprechend geformte Aufnahme des Korbes 56 eingesetzt und beispielsweise rastend festgehalten werden oder es kann die Standplattform integral mit dem Korb ausgebildet und damit ein Bestandteil des Behälters 56 sein. Die Oberkante 57 des Kunststoff-Korbbehälters 56 liegt im Beispiel ungefähr in der Höhe der Oberseite des Grundkörpers oder etwas höher als diese, so daß bei Befüllen des Behälters 56 mit Steinen, Kies und/oder anderem Beschwerungsmaterial der Pumpenkörper ggf. vollständig mit Beschwerungsmaterial bedeckt werden kann und somit der gesamte Teicheinsatz von außerhalb des Teiches praktisch unsichtbar wird.

In Fig. 6 ist eine andere Ausführungsform eines Teicheinsatzes 60 gezeigt, bei dem ein sich nach oben leicht erweiterndes, rechteckiges Kunststoff-Korbbehältnis 61 lediglich die Einlaßseite der Pumpe 62 umgibt. Die Einlaßseite ist hier an dem becherförmigen, mit Filterschlitzen versehenen Filtergehäuse 63 erkennbar, daß den stirnseitigen Einlaßstutzen der Pumpe umgibt. Bei dieser Ausführungsform liegt die Korboberkante deutlich oberhalb der Oberseite des Filtergehäuses. Das Korbbehältnis 61 kann wie beschrieben mit Beschwerungsmaterial wie Kies, Steinen o.dgl. gefüllt werden, wobei die Befüllung des Behälters unter anderem eine Verbesserung der Standfestigkeit des Teicheinsatzes bewirkt. Insbesondere bei vollständiger Füllung des Korbes 61 und entsprechender vollständiger Bedeckung des Filtereinsatzes 63 kann geeignetes Befüllmaterial, beispielsweise Kies mit einer mittleren Größe von einem oder mehreren wenigen Zentimetern, außerdem als eine dem Einlaßstutzen und der pumpenfesten Filtereinrichtung 63 vorgeschaltete, relativ groben Vorfiltereinrichtung dienen, die beispielsweise Blätter, Wurzeln o.dgl. abhält, so daß lediglich bei Bedarf noch eine weitere feinere Filterung im Bereich des Filtereinsatzes 63 am Pumpenkörper vorgesehen zu sein braucht. Hierdurch kann die Lebensdauer der pumpenfesten Filtermedien deutlich erhöht werden. Ggf. kann eine zusätzliche Filterung im Bereich des Filtergehäuses 63 und mithin ggf. auch das Filtergehäuse gänzlich entfallen. Diese Vorteile können sich auch bei den Ausführungen gemäß Figuren 1 und 5 ergeben. Die Ausführungsform nach Fig. 6 hat beispielsweise gegenüber den Varianten nach Figuren 1 und 5 noch den Vorteil, daß der Pumpenkörper auch nach Befüllung des Behälters mit Beschwerungsmaterial noch zugänglich und insbesondere um seine Längsachse drehbar ist, um ggf. die Ausrichtung der Ausgangsanschlüsse optimal einzustellen. Auch die radial abführenden Ausgangsanschlüsse 64, 65 sind noch zugänglich.

In Fig. 7 ist schematisch ein Teicheinsatz 70 skizziert, bei dem die Pumpenanordnung inklusive Standfuß genau wie die Anordnung gemäß Fig. 5 ausgebildet sein kann. Im Unterschied zu Fig. 5 ist jedoch anstatt des im wesentlichen formstabilen Korbbehälters 56, der die Pumpe auch seitlich umschließt, ein formveränderlicher bzw. formvariabler Behälter 72 in Form eines Netzes vorgesehen, in das durch eine Befüllöffnung im unteren Bereich der Standfußeinrichtung Steine 73 und/oder Kies o.dgl. eingefüllt wurde. Das Netz ist an der Unterseite der Standfußeinrichtung befestigt und kann, wenn es nicht benötigt wird, zusammengefaltet oder geknüllt und im Aufnahmeraum 55 verstaut werden. Bei Bedarf wird das Netz durch die Öffnungen im Fußbereich mit Beschwerungsmaterial gefüllt und ggf. verschlossen und beispielsweise in der-gezeigten Art auf einem unebenen Teichboden 74 platziert. Durch Zurechtrütteln des Netzinhalts paßt sich die Behälterunterseite an den Verlust des Teichbodens an und es kann auf der dem Teichboden abgewandten Oberseite des Netzes eine mehr oder weniger horizontale Fläche erzeugt werden, auf der dann der Standfuß der Pumpenanordnung aufliegt. Durch die bevorzugte, feste Verbindung des Netzes mit der Standplattform ist ein sicherer Stand der Pumpenanordnung gewährleistet. Anstatt eines Netzes kann auch ein Sack o.dgl. verwendet werden. Man kann eine Pumpe derart anbringen, daß deren Ausgangsöffnung innerhalb oder in Nähe des aufgenommenen Beschwerungsmaterials liegt. Nicht nur das Beschwerungsmaterial, sondern auch das Behältnis selbst kann eine Filterfunktion übernehmen, wobei durch Aufbau des Behältnismaterials und dessen Öffnungsweite die Feinheit der Filterung bestimmbar ist.

Es ist für den Fachmann verständlich, daß die Vorteile, die sich aus der Verwendung der beispielhaft beschriebenen Behälter hinsichtlich Standfestigkeit und ggf. Filterung und/oder aus ästhetischen Gesichtspunkten ergeben, bei jeder Art von Pumpe, also auch bei Pumpen mit nur einem Ausgangsanschluß, ergeben können. Auch bei anderen im Teich einsetzbaren Funktionseinheiten wie Filtern, Düsen, Leuchten o.dgl. können die Standfestigkeit erhöhende Behälter der beispielhaft beschriebenen Art vorteilhaft sein.

## Patentansprüche

1. Teicheinsätz, insbesondere zum Einsetzen in einen Gartenteich, mit mindestens einer motorbetriebenen Pumpe (2; 45; 62; 71), die mindestens einen Einlassanschluss (25) sowie einen ersten Auslassanschluss (5; 47; 64) und zusätzlich mindestens einen zweiten Auslassanschluss (6; 65) aufweist, **dadurch gekennzeichnet, dass** der erste Auslassanschluss (5; 64) und ein zweiter Auslassanschluss (6; 65) rechtwinklig zueinander ausgerichtet oder ausrichtbar sind, wobei ein Auslassanschluss im wesentlichen parallel und ein anderer Auslassanschluss im wesentlichen senkrecht zu einer Standfläche der Pumpe ausgerichtet oder ausrichtbar ist.

2. Teicheinsatz nach Anspruch 1, **gekennzeichnet durch** eine Belüftungseinrichtung (30), die nach Art einer Wasserstrahlpumpe arbeitet und mit Mitteln (32, 33) zur lösbaren Befestigung, insbesondere zum Anschrauben, an einen Ausgangsanschluss der Pumpe versehen ist.

3. Teicheinsatz nach Anspruch 1 oder 2, **dadurch gekennzeichnet, dass** mindestens einer der Auslassanschlüsse bezogen auf eine Standfläche des Teicheinsatzes variabel ausrichtbar ist.

4. Teicheinsatz nach Anspruch 1 oder 2, **dadurch gekennzeichnet, dass** mindestens ein Auslassanschluss (5) einen Fortsatz (9) aufweist, der richtungsveränderlich mit einem Ausgangsanschlussstutzen (7) der Pumpe verbunden ist, wobei der Ausgangsanschlussstutzen (7) und der Fortsatz (9) über ein wasserführendes Kugelgelenk (8) verbunden sind.

5. Teicheinsatz nach einem der vorhergehenden Ansprüche, **dadurch gekennzeichnet, dass** ihm eine eine Standfläche definierende Standfußeinrichtung (49) zugeordnet ist, an der die Pumpe, vorzugsweise lösbar und/oder beweglich, befestigt ist, wobei die Standfußeinrichtung derart ausgebildet ist, dass die Pumpe um eine standflächenparallele Schwenkachse (15) schwenkbar ist.

6. Teicheinsatz nach einem der vorhergehenden Ansprüche, **dadurch gekennzeichnet, dass** bei mindestens einem der Auslassanschlüsse (5, 6) die Durchflussmenge unabhängig vom Pumpenantrieb einstellbar ist.

7. Teicheinsatz nach einem der vorhergehenden Ansprüche, **dadurch gekennzeichnet, dass** bei mindestens einem der Auslassanschlüsse (6) der Durchlassquerschnitt, vorzugsweise stufenlos, veränderbar ist, wobei dem Auslassanschluss ein Regulierventil (22) zugeordnet ist, das eine Regulierhülse (18) aufweist, die unmittelbar am Auslassanschluss (6) angebracht oder anbringbar, insbesondere anschraubbar ist oder wobei das Regulierventil mit Abstand von dem zugeordneten Auslassanschluss (6) an einem mit dem Auslassanschluss verbindbaren Leitungsstück angebracht oder anbringbar ist, vorzugsweise oberhalb eines Teichwasserspiegels.

8. Teicheinsatz nach einem der vorhergehenden Ansprüche, **dadurch gekennzeichnet, dass** der Eingangsanschluss als Eingangsstutzen mit einem Schraubgewinde (27) oder einem Kupplungsanschluss ausgebildet ist und/oder dass mindestens ein Ausgangsanschluss (6) als Ausgangsstutzen (16) mit einem Schraubgewinde (17) oder einem Kupplungsanschluss ausgebildet ist.

9. Teicheinsatz nach einem der vorhergehenden Ansprüche, **dadurch gekennzeichnet, dass** der erste und der zweite Ausgangsanschluss derart miteinander kommunizierend ausgebildet sind, dass die Durchflussmenge durch einen Ausgangsanschluss (5) mittels Regulierung der Durchflussmenge durch den anderen Ausgangsanschluss (6) einstellbar ist.

10. Teicheinsatz nach Anspruch 2, **dadurch gekennzeichnet, dass** an dem senkrecht zur Standfläche ausgerichteten Ausgangsanschluss (6) ein Wasserspiel o.dgl. angeschlossen oder anschließbar ist.

11. Teicheinsatz nach einem der vorhergehenden Ansprüche, **dadurch gekennzeichnet, dass** er mindestens einen fest mit der Pumpe verbundenen oder verbindbaren Behälter (3; 55; 56; 61; 72) zur Aufnahme von schüttbarem Beschwerungsmaterial wie Kies, Steinen und/oder dergleichen aufweist.

12. Teicheinsatz nach Anspruch 10, **dadurch gekennzeichnet, dass** die Pumpe (2; 45; 62) zumindest mit dem Bereich des Einlassanschlusses (25) im wesentlichen innerhalb des Behälters angeordnet oder diesem zugewandt ist.

13. Teicheinsatz nach einem der Ansprüche 10 oder 11, **dadurch gekennzeichnet, dass** der Behälter (3; 56; 61) die Pumpe (2; 45) oder einen Teil (63) der Pumpe umgebende Seitenwände hat, deren Höhe der Höhe der mit dem Behälter verbundenen Pumpe derart angepasst ist, dass die Pumpe durch in dem Behälter aufgenommenes Beschwerungsmaterial im wesentlichen vollständig abdeckbar ist, wobei der obere Abschluss (42; 57) der Seitenwände höher liegt als die Oberseite der Pumpe.

14. Teicheinsatz nach Anspruch 11, **dadurch gekennzeichnet, dass** der Behälter bleibend formveränderlich ist und durch ein mit schüttfähigem Beschwerungsmaterial befüllbares Netz (72) gebildet ist, wobei der formveränderliche Behälter (72) zumindest teilweise unterhalb der Standfläche der Pumpe (71) angeordnet oder anordenbar ist.

15. Teicheinsatz nach einem der Ansprüche 11 bis 13, **dadurch gekennzeichnet, dass** der Behälter (3) mindestens eine Aufnahmeeinrichtung (44) zur lösbaren Befestigung einer Funktionseinheit, insbesondere einer Beleuchtungseinrichtung, an dem Behälter aufweist.

16. Teicheinsatz nach einem der vorhergehenden Ansprüche, **dadurch gekennzeichnet, dass** eine dem Einlassanschluss (25) vorgeschaltete Filtereinrichtung vorgesehen ist, die mindestens einen im Ansaugbereich des Einlassanschlusses angeordneten Behälter zur Aufnahme von schüttfähigem Beschwerungsmaterial wie Kies, Steinen, und/oder dergleichen aufweist.

## Claims

1. Pond insert, particularly for inserting in a garden pond, having at least one motor-driven pump (2; 45; 62; 71), which has at least one inlet connection (25), as well as a first outlet connection (5; 47; 64) and additionally at least one second outlet connection (6; 65), **characterized in that** the first outlet connection (5; 64) and a second outlet connection (6; 65) are oriented or orientable substantially at right angles to one another and preferably one outlet connection is oriented or orientable substantially parallel and another outlet connection substantially perpendicular to a standing surface of the pump.

2. Pond insert according to claim 1, **characterized by** an aerating pump (30) operating in the manner of a water jet pump and provided with means (32, 33) for detachable fixing, particularly screwing, to an outlet connection of the pump.

3. Pond insert according to claim 1 or 2, **characterized in that** at least one of the outlet connections is variably orientable relative to a standing surface of the pond insert.

4. Pond insert according to claim 1 or 2, **characterized in that** at least one outlet connection (5) has an extension (9), which is connected in directionally variable manner to an outlet connection socket (7) of the pump and preferably the outlet socket connection (7) and extension (9) are connected by means of a water-carrying ball joint (8).

5. Pond insert according to one of the preceding claims, **characterized in that** with it is associated a standing surface-defining standing foot means (49), to which the pump is fixed in a preferably detachable and/or movable manner and preferably the standing foot means is so constructed that the pump is pivotable about a standing surface-parallel pivoting axis (15).

6. Pond insert according to one of the preceding claims, **characterized in that** in the case of at least one of the outlet connections (5, 6), the flow quantity is adjustable independently of the pump drive.

7. Pond insert according to one of the preceding claims, **characterized in that** for at least one of the outlet connections (6) the passage cross-section is preferably continuously variable and preferably with the outlet connection is associated a preferably manually operable regulating valve (22), which has a regulating sleeve (18), which is fitted or fittable, particularly screwable directly to the outlet connection (6) and where the regulating valve is fitted or fittable at a distance from the associated outlet connection (6) to a preferably flexible line piece connectable to the outlet connection and preferably above a pond water surface.

8. Pond insert according to one of the preceding claims, **characterized in that** the inlet connection is constructed as an inlet socket with a screw thread (27) or a coupling connection and/or the at least one outlet connection (6) is constructed as an outlet socket (16) with a screw thread (17) or a coupling connection.

9. Pond insert according t6 one of the preceding claims, **characterized in that** the first and second outlet connections are constructed in intercommunicating manner in such a way that the flow quantity through an outlet connection (5) can be adjusted by regulating the flow quantity, particularly the flow cross-section through the other outlet connection (6).

10. Pond insert according to one of the preceding claims, **characterized in that** to at least one of the outlet connections (6) is connected or connectable a fountain or the like.

11. Pond insert according to one of the preceding claims, **characterized in that** it has at least one container (3; 55; 56; 61; 72) firmly connected or connectable to the pump for receiving in particular pourable weighting material such as gravel, stones, rocks and/or the like.

12. Pond insert according to claim 10, **characterized in that** the pump (2; 45; 62) at least with the area of the inlet connection (25) is placed substantially within or faces the container.

13. Pond insert according to one of the claims 10 or 11, **characterized in that** the container (3; 56; 61) has side walls surrounding the pump (2; 45) or a part (63) thereof and whose height is adapted to that of the pump connected to the container in such a way that the pump is substantially completely coverable by weighting material received in the container and preferably an upper termination (42; 57) of the side walls is higher than the top of the pump.

14. Pond insert according to claim 11, **characterized in that** the container is permanently shape-variable and preferably the container is formed by a netting (72) fillable with pourable weighting material, the shape-variable container (72) being placed or placeable at least partly below the standing surface of the pump (71).

15. Pond insert according to one of the claims 11 to 13, **characterized in that** the container (3) has at least one reception device (44) for the detachable fixing of a functional unit, particularly a lighting means to the container.

16. Pond insert according to one of the preceding claims, **characterized in that** there is a filter means upstream of the inlet connection (25) and which has at least one container located in the intake area of the inlet connection for receiving in particular pourable weighting material such as gravel, stones, rock and/or the like.

## Revendications

1. Dispositif à employer dans un étang, notamment à placer dans un étang de jardin, avec au moins une pompe actionnée par moteur (2 ; 45 ; 62 ; 71), qui présente au moins un raccord d'accès (25) ainsi qu'un premier raccord de sortie (5 ; 47 ; 64) et en plus au moins un deuxième raccord de sortie (6 ; 65), **caractérisé en ce que** le premier raccord de sortie (5 ; 64) et un deuxième raccord de sortie (6 ; 65) sont orientés ou orientables de manière orthogonale l'un par rapport à l'autre, un raccord de sortie étant orienté ou orientable de manière essentiellement parallèle et un autre raccord de sortie étant orienté ou orientable de manière essentiellement orthogonale par rapport à une surface de pose de la pompe.

2. Dispositif à employer dans un étang d'après la revendication 1, **caractérisé par** un moyen d'aération (30) travaillant à la manière d'un éjecteur à eau et qui est doté de moyens (32, 33) pour la fixation révocable, notamment pour le vissage sur un raccord de sortie de la pompe.

3. Dispositif à employer dans un étang d'après la revendication 1 ou 2, **caractérisé en ce qu'**au moins un des raccords de sortie peut être orienté de manière variable par rapport à une surface de pose du dispositif pour l'emploi dans un étang.

4. Dispositif à employer dans un étang d'après la revendication 1 ou 2, **caractérisé en ce qu'**au moins un raccord de sortie (5) présente un prolongement (9), qui est raccordé, en étant variable dans son orientation, avec une tubulure du raccord de sortie (7) de la pompe, la tubulure du raccord de sortie (7) et le prolongement (9) étant raccordés au moyen d'une articulation sphérique conduisant de l'eau.

5. Dispositif à employer dans un étang d'après une des revendications précédentes, **caractérisé en ce qu'**une structure de piédestal (49) définissant une surface de pose lui est attribuée, sur laquelle la pompe est fixée de façon de préférence amovible et/ou mobile, la structure de piédestal étant réalisée de sorte que la pompe est pivotable autour d'un axe de pivotement (15) parallèle à la surface de pose.

6. Dispositif à employer dans un étang d'après une des revendications précédentes, **caractérisé en ce que** pour au moins un des raccords de sortie (5, 6) le débit de passage peut être réglé indépendamment du générateur de pression de la pompe.

7. Dispositif à employer dans un étang d'après une des revendications précédentes, **caractérisé en ce que** pour au moins un des raccords de sortie (6) la section de passage est variable de préférence de manière continue, une soupape de réglage (22) étant associée au raccord de sortie, soupape qui présente une douille de réglage (18) appliquée ou pouvant être appliquée et pouvant être notamment vissée directement au raccord de sortie (6), ou bien la soupape de réglage étant appliquée ou pouvant être appliquée, à une certaine distance du raccord de sortie (6), à un élément de tuyau qui peut être joint au raccord de sortie, de préférence au-dessus d'un niveau hydrostatique de l'étang.

8. Dispositif à employer dans un étang d'après une des revendications précédentes, **caractérisé en ce que** le raccord d'accès est réalisé en tant que tubulure d'accès avec un filet (27) ou un raccord d'accouplement et/ou **en ce qu'**au moins un raccord de sortie (6) est réalisé en tant que tubulure de sortie (16) avec un filet (17) ou un raccord d'accouplement.

9. Dispositif à employer dans un étang d'après une des revendications précédentes, **caractérisé en ce que** le premier et le deuxième raccord de sortie sont réalisés de manière communicante entre eux de sorte que le débit de passage à travers un raccord de sortie (5) puisse être ajusté au moyen d'un réglage du débit de passage à travers l'autre raccord de sortie (6).

10. Dispositif à employer dans un étang d'après la revendication 2, **caractérisé en ce qu'**un jeux d'eau ou similaires est raccordé ou peut être raccordé au raccord de sortie (6) orienté orthogonalement par rapport à la surface de pose.

11. Dispositif à employer dans un étang d'après une des revendications précédentes, **caractérisé en ce qu'**il présente au moins un récipient (3 ; 55 ; 56 ; 61 ; 72) joint ou pouvant être joint de manière fixe à la pompe pour le logement de matériaux alourdissants en vrac tels que du gravier, des pierres et/ou similaires.

12. Dispositif à employer dans un étang d'après la revendication 10, **caractérisé en ce que** la pompe (2 ; 45 ; 62) est essentiellement disposée à l'intérieur du récipient ou orientée vers celui-ci au moins au moyen de son domaine de raccord d'accès (25).

13. Dispositif à employer dans un étang d'après une des revendications 10 ou 11, **caractérisé en ce que** le récipient (3 ; 56 ; 61), la pompe (2 ; 45) ou une partie (63) de la pompe présente des parois latérales environnantes, dont la hauteur est adaptée à la hauteur de la pompe raccordée au récipient, de sorte que la pompe peut être en substance entièrement recouverte par un matériau alourdissant logé dans le récipient, la terminaison supérieure (42 ; 57) des parois latérales étant plus haute que la face supérieure de la pompe.

14. Dispositif à employer dans un étang d'après la revendications 11, **caractérisé en ce que** le récipient garde la variabilité de sa forme et qu'il est constitué d'un filet (72) pouvant être rempli d'un matériau alourdissant en vrac, le récipient (72), qui présente une variabilité de forme, étant disposé ou pouvant être disposé au moins en partie au-dessous de la surface de pose de la pompe (71).

15. Dispositif à employer dans un étang d'après une des revendications de 11 à 13, **caractérisé en ce que** le récipient (3) présente au moins un moyen de logement (44) pour la fixation révocable d'une unité opérationnelle, notamment d'un moyen d'éclairage sur le récipient.

16. Dispositif à employer dans un étang d'après une des revendications précédentes, **caractérisé en ce qu'**on prévoit un moyen de filtrage couplé en amont du raccord d'accès (25), moyen de filtrage qui présente au moins un récipient disposé dans le domaine d'aspiration du raccord d'accès pour le logement de matériaux alourdissants en vrac tels que du gravier, des pierres et/ou similaires.
